# FASCICULE DE BREVET EUROPEEN

(11) **EP 1 859 999 B1**
(45) Date de publication et mention de la délivrance du brevet: **08.07.2009**
(21) Numéro de dépôt: 07350005.0
(22) Date de dépôt: 03.05.2007
(51) Int. Cl.: B60R 21/13

(54) **Dispositif de sécurité comprenant un arceau de sécurité équipé d'une protubérance et véhicule automobile équipé d'un tel dispositif**
Sicherheitsvorrichtung, die einen Überrollbügel umfasst, der mit einem Überhang ausgestattet ist, und mit einer solchen Vorrichtung ausgestattetes Kraftfahrzeug
Safety device comprising a roll bar equipped with a protuberance and automobile vehicle equipped with such a device

(30) Priorité: 24.05.2006 FR 0604704
(43) Date de publication de la demande: 28.11.2007
(73) Titulaire: Heuliez, 79140 Cerizay (FR)
(72) Inventeur: Hudon, Olivier, 49120 Chemille (FR)
(74) Mandataire: Tournel, Jean Louis

(56) Documents cités:
- EP-A- 1 510 412
- EP-A2- 0 411 448
- WO-A-91/02669
- DE-B3-6102005 004 64
- DE-U1- 9 416 772
- FR-A- 2 873 072
- FR-A1- 2 877 901
- US-B1- 6 386 585

## Description

L'invention concerne un dispositif de sécurité en cas de retournement d'un véhicule et un véhicule automobile équipé d'un tel dispositif.

Dans l'art antérieur, il est connu de nombreux types de dispositifs de sécurité munis d'arceaux déployables et destinés à équiper des véhicules automobiles du type cabriolet.

De tels dispositifs sont connus par exemple par le document FR 2 873 072. Le dispositif de sécurité décrit dans ce document est composé de deux arceaux cintrés montés articulés sur une platine centrale. Ainsi, les arceaux sont déplaçables d'une position effacée vers une position déployée en cas de retournement du véhicule. Le dispositif comprend en outre un système en précontrainte pour le déploiement de chaque arceau, un système de déclenchement activé en cas de retournement du véhicule et au moins un organe de verrouillage maintenant la précontrainte et libéré grâce au système de déclenchement.

Dans l'art antérieur, les arceaux, lorsqu'ils sont dans leur position effacée, occupent un volume important car leur extrémité libre rentre vers l'intérieur du véhicule. Par conséquent, l'espace utilisé par les arceaux restreint l'espace disponible pour le rangement des bagages, pour le rangement du toit escamotable ou encore pour l'emplacement d'un moteur arrière.

L'invention vise à remédier à ces problèmes en proposant un dispositif de sécurité en cas de retournement du véhicule dont l'encombrement soit restreint tout en proposant des caractéristiques de résistance égale ou supérieure au dispositif de l'art antérieur.

Alternativement ou en complément, l'invention peut également permettre de réaliser des dispositifs de sécurité dont la ligne d'action est plus haute alors que son encombrement lorsque les arceaux sont en position effacée est inférieur.

A cet effet, et selon un premier aspect, l'invention propose un dispositif de sécurité en cas de retournement d'un véhicule comprenant au moins un arceau de sécurité formé par une barre coudée, possédant deux extrémités dont la première extrémité est montée articulée sur un support de façon à permettre le déplacement dudit arceau en cas de retournement d'une position effacée vers une position déployée. L'arceau de sécurité est pourvu, à proximité du coude de la barre, d'une protubérance faisant saillie vers le haut lorsque l'arceau de sécurité est dans sa position déployée.

Ainsi, les arceaux peuvent être de longueur moindre ce qui diminue leur encombrement lorsqu'ils sont dans leur position effacée.

De plus, la protubérance permet de renforcer l'arceau à l'endroit de l'impact éventuel en cas de retournement du véhicule et sur la zone de support du véhicule retourné.

Avantageusement, la section de la protubérance selon le plan de l'arceau xy possède une forme de dôme.

Avantageusement, la section de l'arceau selon le plan perpendiculaire yz au plan de l'arceau xy possède sensiblement une forme de I dont les deux extrémités, respectivement supérieure et inférieure, sont formées par des proéminences sensiblement ovales tandis que la partie centrale est formée par un corps à faces latérales concaves.

Ainsi, cette forme particulière de la section des arceaux permet d'obtenir une bonne résistance aux différentes forces exercées lors d'un éventuel retournement (torsion, force exercée selon x, y ou z).

Avantageusement, l'arceau de sécurité composé de la barre coudée et de la protubérance est une pièce de forme obtenue par moulage ou formage. Avantageusement, cette pièce de forme pourra être monobloc. Ainsi, la résistance de l'arceau est satisfaisante.

Dans un mode de réalisation de l'invention, le dispositif de sécurité comprend:
- Des moyens élastiques de rappel pour le déploiement automatique de chaque arceau ;
- un système de déclenchement activé en cas de retournement du véhicule ;
- au moins un organe de verrouillage qui maintient les moyens de rappel sous précontrainte et qui se libère grâce au système de déclenchement libérant ainsi chaque arceau de sa position effacée ;
- deux systèmes anti-retour coopérant avec la deuxième extrémité des arceaux de sécurité lorsque lesdits arceaux sont en position déployée afin d'empêcher le retrait des arceaux.

Dans un mode de réalisation, le dispositif de sécurité comprend deux boîtiers de guidage latéraux destinées à recevoir les portions des arceaux s'étendant des secondes extrémités des arceaux aux courbures des arceaux. Avantageusement, les protubérances sont logées dans les boîtiers de guidage latéraux lorsque les arceaux sont dans leur position effacée.

Ainsi, les protubérances sont invisibles lorsque les arceaux sont en position effacée et leur encombrement est réduit.

Selon un deuxième aspect, l'invention concerne un véhicule automobile équipé d'un dispositif de sécurité selon l'invention.

D'autres objets et avantages de l'invention apparaîtront au cours de la description qui suit, faite en référence aux dessins annexés, dans lesquels :
- la figure 1 est une représentation schématique d'un dispositif de sécurité, représentant à droite, un arceau de sécurité selon l'art antérieur en position effacée et en position déployée et à gauche, les positions déployées et effacées d'un arceau de sécurité selon l'art antérieur et d'un arceau de sécurité selon l'invention représenté en traits pointillés;
- la figure 2 est une représentation schématique d'un dispositif de sécurité selon l'invention, représentant la disposition de la protubérance lorsque l'arceau est dans sa position effacée et représentant des sections de l'arceau en coupe selon un plan perpendiculaire à l'arceau.
- La figure 3 est une représentation schématique d'un dispositif de sécurité en position inactive, les arceaux de sécurité étant articulés sur les cotés du véhicule.
- La figure 4 est une représentation graphique des dispositifs de la figure 3 en position déployée.

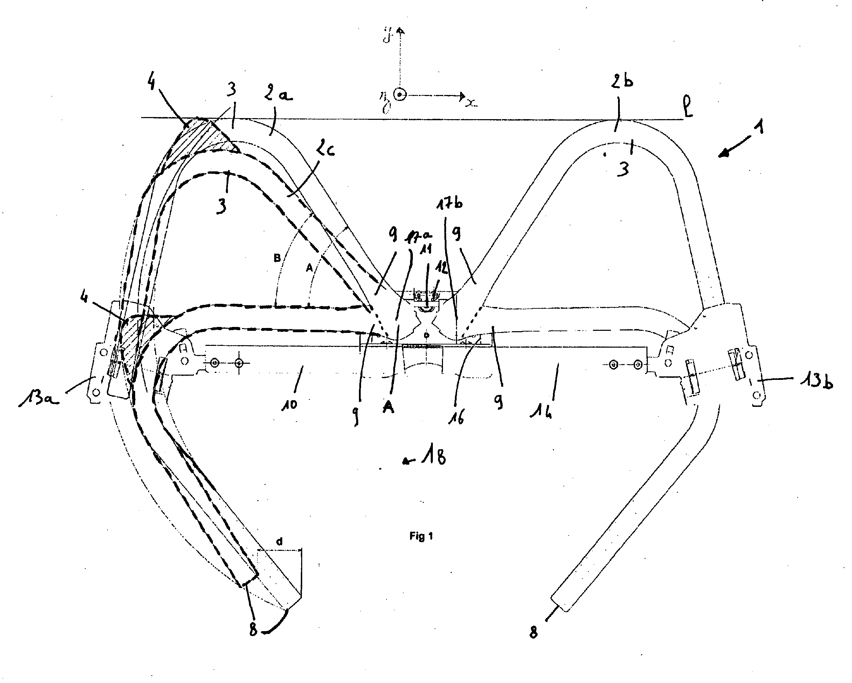

Le dispositif de sécurité 1 représenté sur la figure 1 est destiné à être disposé transversalement derrière la rangée de sièges arrière d'un véhicule automobile du type cabriolet.

Le dispositif 1 est équipé d'un support 10 formé d'une poutre transversale 14 fixée à chacune de ses extrémités à des boîtiers de guidage latéraux 13a, 13b destinés à être fixés à la structure du véhicule. Ainsi, le volume 18 situé en dessous de la poutre transversale 14 peut être utilisé pour le rangement des bagages et/ou le rangement du toit escamotable et/ou l'emplacement d'un moteur.

Dans le mode de réalisation représenté, le dispositif de sécurité 1 est équipé de deux arceaux de sécurité 2a, 2b, 2c. La partie droite de la figure 1 représente un arceau de sécurité 2b selon l'art antérieur alors que la partie gauche représente les positions comparées d'un arceau 2a selon l'art antérieur et d'un arceau 2c selon l'invention représenté en traits pointillés. Chaque arceau 2a, 2b, 2c est illustré dans une position effacée et dans une position déployée.

L'arceau 2c selon l'invention est formé par une barre coudée 3, ou tube cintré, équipée d'une protubérance 4 faisant saillie vers le haut lorsque l'arceau de sécurité 2c est dans sa position déployée. La protubérance 4 est située sur la surface convexe de la barre 3, au niveau de la courbure ou coude.

L'arceau possède deux extrémités 8, 9 dont la première extrémité 9 est monté articulé, en rotation selon un axe A sur un support 10.

La ligne 1 représente la ligne d'action des arceaux 2a, 2b, 2c lorsqu'ils sont dans leur position déployée. Sur la figure 1, on peut observer que l'arceau 2c muni d'une protubérance 4 effectue une rotation d'un angle B entre sa position effacée et sa position déployée alors que l'arceau 2a de l'art antérieur effectue une rotation d'un angle A supérieure à l'angle B. Ainsi, la longueur de la portion de l'arceau 2c s'étendant de la seconde extrémité 8 au coude de l'arceau 2c peut être de longueur inférieure. Par conséquent, lorsque l'arceau 2c est en position de repos, la seconde extrémité 8 de l'arceau 2c est décalée d'une distance d vers l'extérieur du véhicule ce qui limite l'empiètement sur le volume 18.

Alternativement ou en complément, l'invention peut permettre d'augmenter la hauteur de la ligne d'action l de l'arceau de sécurité 2c sans augmenter l'encombrement latéral du dispositif 1 lorsque les arceaux 2c sont dans leur position effacée.

La section de la protubérance 4 selon le plan de l'arceau xy possède une forme de dôme. Ainsi, la résistance de l'arceau 2c à une force exercée selon l'axe y est améliorée.

L'arceau de sécurité 2c comprenant la barre coudée 3 et la protubérance 4 est une pièce de forme obtenue par moulage ou par formage. Avantageusement, l'arceau de sécurité est une pièce monobloc. Ainsi, la résistance de l'arceau 2c est améliorée et les risques de désolidarisation de la protubérance 4 avec la barre 3 est sensiblement diminué.

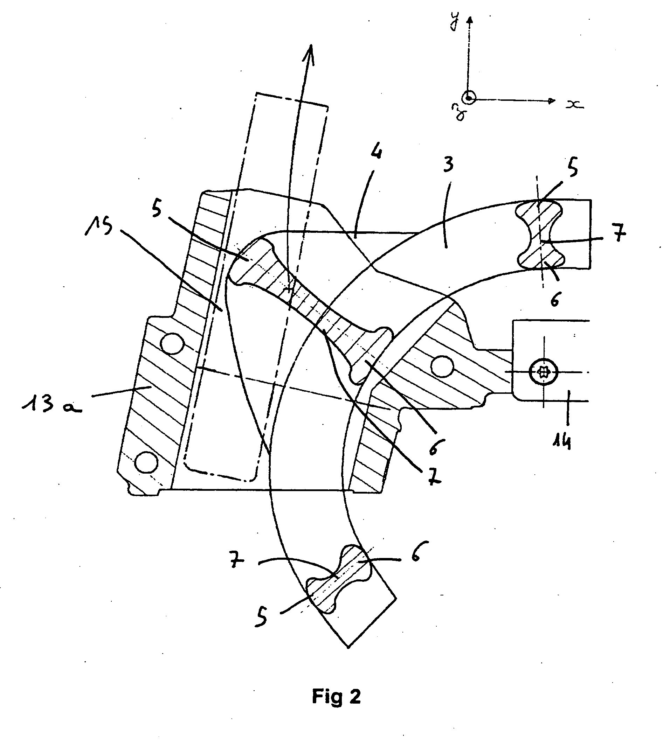

Sur la figure 2, la section de l'arceau 2c selon le plan longitudinal yz perpendiculaire au plan de l'arceau 2c est représentée à différents niveaux de l'arceau 2c. La section possède sensiblement une forme de I. Les deux extrémités 5, 6 du I sont formées par des proéminences ovales. Dans le mode de réalisation représenté, les extrémités 5, 6 sont sensiblement des ellipses dont le grand axe s'étend selon la direction z. La partie centrale 7 est formée par un corps à faces latérales concaves. De préférence, la forme en 1 s'étend sur l'essentiel de la longueur de l'arceau 3c. On notera également que les deux extrémités 5, 6 peuvent être de forme oblong avec des parois latérales courbes.

Le dispositif de sécurité 1 comprend également des boîtiers de guidage latéraux 13a, 13b destiné à recevoir la portion des arceaux 2c s'étendant des secondes extrémités 8 des arceaux 2c jusqu'aux courbures des arceaux 2c. Dans le mode de réalisation représenté, lorsque l'arceau 3c est en position effacée, la courbure ainsi que la protubérance 4 sont logés à l'intérieur des boîtiers de guidages latéraux 13a, 13b.

A cet effet, les boîtiers de guidage 13a, 13b possèdent dans leur partie supérieure un logement 15 s'étendant selon la direction transversale x afin de permettre le logement des protubérances 4 lorsque les arceaux 2c sont dans leur position effacée.

Un système anti-retour, non représenté, est disposé à l'intérieur de chaque boîtier de guidage 13a, 13b. Les systèmes anti-retour sont par exemple des systèmes à cliquet dont les cliquets coopèrent avec des dents formées sur la deuxième extrémité 8 des arceaux 13a, 13b. Ainsi, les systèmes anti-retour permettent d'empêcher le retrait des arceaux 2a, 2b, 2c lorsque ceux-ci se trouvent en position déployée.

Le dispositif de sécurité 1 comprend en outre des moyens de rappel élastique pour le déploiement automatique de chaque arceau 2a, 2b, 2c, un système de déclenchement 12 activé en cas de retournement du véhicule et un organe de verrouillage 11 qui maintient les moyens de rappel sous une précontrainte et se libère grâce au système de déclenchement 12.

Dans le mode de réalisation représentée, la poutre transversale 14 permet de supporter une platine centrale 16. Les paliers d'articulation 17a, 17b des arceaux 2a, 2b, 2c sont disposés sur la platine centrale 16 et sont composés d'une partie fixe tubulaire solidaire de la platine 16 et d'un tube engagé dans la partie fixe. Un ressort possède une première extrémité fixée au tube et une seconde extrémité fixée à la partie fixe. Le ressort est précontraint lorsque l'arceau 2a, 2b, 2c est dans sa position effacée.

Dans un mode de réalisation, la partie mobile du palier 17a, 17b comporte une encoche à l'intérieur de laquelle s'engage un doigt 11 afin de maintenir l'arceau 2a, 2b, 2c en position effacée. En cas de retournement, le système de déclenchement 11 comprenant par exemple un organe à explosif actionne le doigt 11 qui se désengage alors de l'encoche et libère ainsi les arceaux 2a, 2b, 2c.

Dans le mode de réalisation représenté, la portion de l'arceau 2c s'étendant de la deuxième extrémité 8 à la partie coudée est de forme rectiligne. Ainsi, cette portion se projette vers l'intérieur du véhicule de façon moindre et l'encombrement du dispositif est réduit. Cependant, on remarquera que l'invention ne se limite pas à ce type d'arceau et l'arceau peut également être un arceau dont la portion s'étendant de la seconde extrémité 8 à la courbure de l'arceau 2c est une partie courbée.

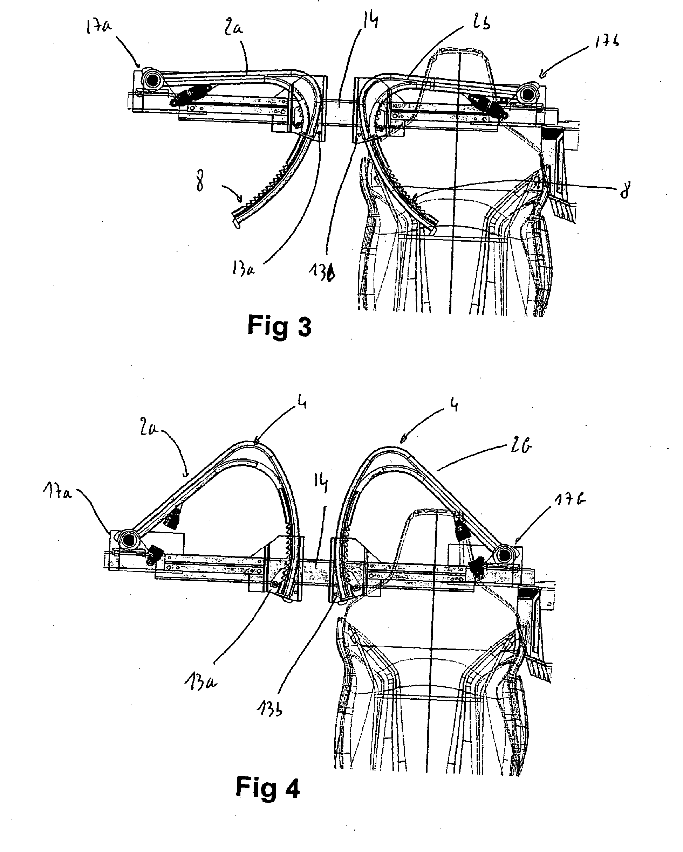

Dans le mode de réalisation des figures 3 et 4, l'articulation des arceaux se fait sur les cotés du véhicule de préférence au voisinage d'un pied arrière. On y retrouve la poutre transversale 14 fixée à ses deux extrémités sur une structure porteuse et résistante du véhicule.
L'articulation des systèmes de sécurité est déplacée vers les cotés du véhicule tandis que les pièces de guidage 13a, 13b sont déplacées vers le centre.
Comme, on peut le voir l'arceau est formé d'une membrure supérieure et d'une membrure inférieure reliées entre elles par un voile résistant que l'on voit formant avec les membrures la protubérance.

Pour des raisons de fabrication, chaque membrure peut résulter d'assemblage de plusieurs tronçons rectilignes et curvilignes.

## Revendications

1. Dispositif de sécurité (1) en cas de retournement d'un véhicule comprenant au moins un arceau de sécurité (2c) formé par une barre coudée (3), possédant deux extrémités (8, 9) dont la première extrémité (9) est montée articulée sur un support (10) de façon à permettre le déplacement dudit arceau, en cas de retournement, d'une position effacée vers une position déployée ; ledit dispositif étant **caractérisé en ce que** l'arceau de sécurité (2c) est pourvu, à proximité du coude de la barre (3), d'une protubérance (4) faisant saillie vers le haut lorsque l'arceau de sécurité (2c) est dans sa position déployée.

2. Dispositif de sécurité (1) selon la revendication 1, **caractérisé en ce que** la section de la protubérance (4) selon le plan de l'arceau (xy) possède une forme de dôme.

3. Dispositif de sécurité (1) selon l'une des revendications 1 ou 2, **caractérisé en ce que** la section de l'arceau (2c) selon un plan (yz) perpendiculaire au plan (xy) de l'arceau (3c) possède sensiblement une forme de I dont les deux extrémités, respectivement supérieure (5) et inférieure (6), sont formées par des proéminences sensiblement ovales.

4. Dispositif de sécurité (1) selon la revendication 3, **caractérisé en ce que** la section de l'arceau (2c) selon un plan perpendiculaire au plan de l'arceau (3c) possède une forme de I dont la partie centrale (7) est formée par un corps à faces latérales concaves.

5. Dispositif de sécurité (1) selon la revendication 1 à 4, **caractérisé en ce que** l'arceau de sécurité (2c) est une pièce de forme obtenue de préférence par moulage ou formage.

6. Dispositif de sécurité (1) selon l'une des revendications 1 à 5, **caractérisé en ce que** l'arceau de sécurité (2c) composé de la barre coudée (3) et de la protubérance (4) est une pièce monobloc.

7. Dispositif de sécurité (1) selon l'une des revendications 1 à 6, **caractérisé en ce qu'**il comprend :
- des moyens de rappel élastique pour le déploiement automatique de chaque arceau (2c) ;
- un système de déclenchement (12) activé en cas de retournement du véhicule ;
- au moins un organe de verrouillage (11) qui maintient les moyens de rappel sous précontrainte et qui se libère grâce au système de déclenchement libérant ainsi chaque arceau (2a, 2c, 2c) de sa position effacée ;
- deux systèmes anti-retour coopérant avec la deuxième extrémité (8) des arceaux de sécurité (2a, 2b, 2c) lorsque lesdits arceaux (2c) sont en position déployée afin d'empêcher le retrait des arceaux (2a, 2b, 2c).

8. Dispositif de sécurité (1) en cas de retournement d'un véhicule selon l'une des revendications 1 à 7, **caractérisé en ce qu'**il comprend deux boîtiers de guidage latéraux (13a, 13b) aptes à recevoir les portions des arceaux (2a, 2b, 2c) s'étendant des secondes extrémités (8) des arceaux (2a, 2b, 2c) jusqu'aux courbures des arceaux (2a, 2b, 2c).

9. Dispositif de sécurité (1) selon la revendication 8, **caractérisé en ce que** les protubérances (4) sont logées dans les boîtiers de guidage latéraux (13a, 13b) lorsque les arceaux (2a, 2b, 2c) sont dans leur position effacée.

10. Dispositif de sécurité(1) selon l'une quelconque des revendications précédentes **caractérisé en que** l'arceau de sécurité est articulé sur un coté du véhicule.

11. Dispositif de sécurité selon la revendication 10 **caractérisé en ce que** l'arceau est articulé au voisinage d'un pied arrière.

12. Véhicule automobile **caractérisé en ce qu'**il est équipé d'un dispositif de sécurité (1) en cas de retournement du véhicule selon l'une des revendications 1 à 11.

## Claims

1. Safety device (1) for the case of overturning of a vehicle, comprising at least one rollover bar (2c) formed by an angled bar (3), having two ends (8, 9), the first end (9) of which is mounted articulated on a support (10) so as to allow the movement of the said bar, in the event of overturning, from a retracted position to a deployed position; the said device being **characterised in that** the rollover bar (2c) is provided, close to the angle of the bar (3), with a protuberance (4) projecting upwards when the rollover bar (2c) is in its deployed position.

2. Safety device (1) according to claim 1, **characterised in that** the cross section of the protuberance (4) in the plane of the bar (xy) has a dome shape.

3. Safety device (1) according to one of claims 1 or 2, **characterised in that** the cross section of the bar (2c) in a plane (yz) perpendicular to the plane (xy) of the bar (3c) has a noticeable I shape, the two ends of which, respectively top (5) and bottom (6), are formed by noticeably oval protrusions.

4. Safety device (1) according to claim 3, **characterised in that** the cross section of the bar (2c) in a plane perpendicular to the plane of the bar (3c) has an I shape, the central part (7) of which is formed by a body with concave lateral faces.

5. Safety device (1) according to claims 1 to 4, **characterised in that** the rollover bar (2c) is a formed part preferably obtained by moulding or forming.

6. Safety device (1) according to one of claims 1 to 5, **characterised in that** the rollover bar (2c) composed of the angled bar (3) and the protuberance (4) is formed in a single piece.

7. Safety device (1) according to one of claims 1 to 6, **characterised in that** it comprises:
- elastic return means for the automatic deployment of each bar (2c);
- a triggering system (12) activated in the event of the vehicle overturning;
- at least one locking member (11) that keeps the return means pre-stressed and is released by virtue of the triggering system thus releasing each bar (2a, 2b, 2c) from its retracted position;
- two non-return systems cooperating with the second end (8) of the rollover bars (2a, 2b, 2c) when the said bars (2c) are in the deployed position in order to prevent the retraction of the bars (2a, 2b, 2c).

8. Safety device (1) in the event of a vehicle overturning according to one of claims 1 to 7, **characterised in that** it comprises two lateral guide housings (13a, 13b) able to receive the portions of the bars (2a, 2b, 2c) extending from the second ends (8) of the bars (2a, 2b, 2c) as far as the curvatures of the bars (2a, 2b, 2c).

9. Safety device (1) according to claim 8, **characterised in that** the protuberances (4) are housed in lateral guide housings (13a, 13b) when the bars (2a, 2b, 2c) are in their retracted position.

10. Safety device (1) according to any one of the preceding claims, **characterised in that** the rollover bar is articulated on one side of the vehicle.

11. Safety device according to claim 10, **characterised in that** the bar is articulated close to a rear foot.

12. Motor vehicle, **characterised in that** it is equipped with a safety device (1) in the event of the vehicle overturning according to one of claims 1 to 11.

## Patentansprüche

1. Schutzvorrichtung (1) im Falle eines Fahrzeugüberschlags mit wenigstens einem Überrollbügel (2c), der durch eine gebogene Stange (3) gebildet ist, die zwei Enden (8, 9) besitzt, wovon das erste Ende (9) an einem Träger (10) derart angelenkt ist, dass bei einem Überschlag die Verlagerung des Bügels von einer eingefahrenen Stellung in eine ausgefahrene Stellung ermöglicht wird; wobei die Vorrichtung **dadurch gekennzeichnet ist, dass** der Überrollbügel (2c) in der Nähe der Biegung der Stange (3) mit einem Überstand (4) versehen ist, der nach oben vorsteht, wenn sich der Überrollbügel (2c) in der ausgefahrenen Stellung befindet.

2. Schutzvorrichtung (1) nach Anspruch 1, **dadurch gekennzeichnet, dass** der Querschnitt des Überstands (4) in der Ebene des Bügels (xy) die Form einer Kuppel aufweist.

3. Schutzvorrichtung (1) nach einem der Ansprüche 1 oder 2, **dadurch gekennzeichnet, dass** der Querschnitt des Bügels (2c) in einer Ebene (yz) senkrecht zur Ebene (xy) des Bügels (2c) im Wesentlichen die Form eines I hat, dessen beide Enden, oben (5) bzw. unten (6), durch im Wesentlichen ovale Auskragungen gebildet sind.

4. Schutzvorrichtung (1) nach Anspruch 3, **dadurch gekennzeichnet, dass** der Querschnitt des Bügels (2c) in einer Ebene senkrecht zur Ebene des Bügels (2c) die Form eines I auweist, dessen mittlerer Teil (7) von einem Körper mit konkaven Seitenflächen gebildet ist.

5. Schutzvorrichtung (1) nach Anspruch 1 bis 4, **dadurch gekennzeichnet, dass** der Überrollbügel (2c) ein Teil ist, dessen Form vorzugsweise durch Formguss oder Umformen erzielt wird.

6. Schutzvorrichtung (1) nach einem der Ansprüche 1 bis 5, **dadurch gekennzeichnet, dass** der durch die gebogene Stange (3) und den Überstand (4) gebildete Überrollbügel (2c) ein einstückiges Teil ist.

7. Schutzvorrichtung (1) nach einem der Ansprüche 1 bis 6, **dadurch gekennzeichnet, dass** sie umfasst:
- elastische Rückstellmittel zum automatischen Ausfahren eines jeden Bügels (2c);
- eine Auslösevorrichtung (12), die im Falle eines Fahrzeugüberschlags aktiviert wird;
- wenigstens ein Verriegelungsorgan (11), das die Rückstellmittel unter Vorspannung hält und das durch die Auslösevorrichtung gelöst wird, wodurch somit jeder Bügel (2a, 2b, 2c) aus seiner eingefahrenen Position gelöst wird;
- zwei Rückzugsicherungsvorrichtungen, die mit dem zweiten Ende (8) der Überrollbügel (2a, 2b, 2c) zusammenwirken, wenn sich die Bügel (2c) in ausgefahrener Position befinden, um das Einziehen der Bügel (2a, 2b, 2c) zu verhindern.

8. Schutzvorrichtung (1) im Falle eines Fahrzeugüberschlags nach einem der Ansprüche 1 bis 7, **dadurch gekennzeichnet, dass** sie zwei seitliche Führungsgehäuse (13a, 13b) umfasst, welche die Teile der Bügel (2a, 2b, 2c) aufzunehmen vermögen, die sich vom zweiten Ende (8) der Bügel (2a, 2b, 2c) bis zur Biegung der Bügel (2a, 2b, 2c) erstrecken.

9. Schutzvorrichtung (1) nach Anspruch 8, **dadurch gekennzeichnet, dass** die Überstände (4) in den seitlichen Führungsgehäusen (13a, 13b) lagern, wenn sich die Bügel (2a, 2b, 2c) in ihrer eingefahrenen Stellung befinden.

10. Schutzvorrichtung (1) nach einem der vorhergehenden Ansprüche, **dadurch gekennzeichnet, dass** der Überrollbügel an einer Fahrzeugseite angelenkt ist.

11. Schutzvorrichtung (1) nach Anspruch 10, **dadurch gekennzeichnet, dass** der Bügel in der Nähe einer C-Säule angelenkt ist.

12. Kraftfahrzeug, **dadurch gekennzeichnet, dass** es mit einer Schutzvorrichtung (1) im Falle eines Fahrzeugüberschlags nach einem der Ansprüche 1 bis 11 ausgestattet ist.
